Europäisches Patentamt

European Patent Office

Office européen des brevets

(11) Publication number: **0 421 467 A2**

# EUROPEAN PATENT APPLICATION

(21) Application number: **90119170.0**

(51) Int. Cl.5: **B28B 11/04**

(22) Date of filing: **05.10.90**

(30) Priority: **05.10.89 JP 260950/89**

(43) Date of publication of application:
**10.04.91 Bulletin 91/15**

(84) Designated Contracting States:
**DE ES FR GB IT**

(71) Applicant: **INAX CORPORATION**
**3-6, Koiehonmachi**
**Tokoname-Shi Aichi(JP)**

(72) Inventor: **Nakamori, Akiyasu, c/o Inax**
**Corporation**
**3-6, Koiehonmachi**
**Tokoname-Shi, Aichi(JP)**

(74) Representative: **Patentanwälte Grünecker,**
**Kinkeldey, Stockmair & Partner**
**Maximilianstrasse 58**
**W-8000 München 22(DE)**

(54) Method of applying curtain glazing.

(57) A method of applying curtain glazing which comprises arranging green tile materials before baking in a row and moving a glaze can for applying curtain glazing above and along the row of the green tile materials.

FIG.1

EP 0 421 467 A2

# METHOD OF APPLYING CURTAIN GLAZING

## BACKGROUND OF THE INVENTION

### Field of the Invention and Related Art Statement

The present invention concerns a method of applying curtain glazing to green tile materials.

In applying curtain glazing, a glaze can be disposed above a belt for conveying a plurality of green tile material (before baking) arranged in a longitudinal row, with a downward slit being formed to the can in a direction perpendicular to the conveying direction, causing a glaze to fall spontaneously through the slit of the glaze can in a curtain-like stream and passing the green tile materials through the stream.

For improving the glazing efficiency in the conventional method of applying curtain glazing, it is considered most effective to arrange a plurality of green tile materials in the direction perpendicular to the conveying direction of them.

For attaining this, it will be apparent that the lateral width and the slit length of the glaze can have to be extended as well in accordance with the increased number of the green tile materials. However, since a great amount of glaze is poured to the inside of the glaze can, extension of the lateral width causes deflection or distortion in the entire glaze can and a large deviation is formed also in the extending direction for the opening width of the slit. If a curtain glazing is applied by using such a glaze can, it is inevitable that the amount of the glaze coated varies on every green tile materials and homogenous quality can no more be insured for products. Further, the amount of the glaze coated on the surface may vary even for one identical green tile material, which can not be marketed as final products in an extreme case.

## OBJECT AND SUMMARY OF THE INVENTION

An object of the present invention is to provide a novel method of applying curtain glazing capable of keeping the amount of a glaze coated to green tile material constant with respect to individual tiles and also through entire products of tiles, thereby improving the efficiency of glazing.

Another object of the present invention is to provide a method of applying curtain glazing capable of improving the efficiency of using glaze by means of a small-sized glaze can, thereby enabling glazing at a reduced cost.

The method of the present application basically comprises three characteristic procedures, that is, a most fundamental procedure with respect to the method of applying curtain glazing (hereinafter referred to as the first method), a procedure developed on the basis of the first method (hereinafter referred to as the second method) and, further, a procedure for conducting the first method or the second method by using a special jig (hereinafter referred to as the third method).

The feature of the first method comprises arranging green tile materials before baking in a row and moving a glaze can for curtain glazing above and along the row of the green tile materials before baking.

The feature of the second method comprises disposing a plurality of green tile materials in a direction perpendicular to the conveying direction of a conveying path for the green tile materials, intermittently feeding the conveying path on every longitudinal pitch of lateral rows of the green tile materials, reciprocating a glaze can for applying curtain glazing above and along the lateral row of the green tile materials when the latter stands still and, after intermittently feeding the conveying path, reciprocating the glaze can relative to the next lateral row of the green tile materials.

The feature of the third method comprises accommodating a predetermined number of green tile materials in a green tile pallet having a receiving tray with its shorter side corresponding to the length for one side of the green tile material and with its longer side corresponding to an integer multiple of the other side of the green tile material and having a glaze-retaining rib formed along the circumference, thereby feeding the green material pallet on the conveying path with its longer side being at the forward and backward ends and then transporting the pallet below the moving area of the glaze can for curtain glazing that intersects the conveying direction.

Each of the first through third methods as described above is based on the principle that a plurality of green tile materials are arranged in a row and the glaze can is displaced above and along the row. That is, it is no more necessary to extend the lateral width or the slit length of the glaze can as in the conventional case but it may be of such a size as corresponding substantially to the length of one side of the green tile material. Accordingly, the glaze can is free from the worry that the opening width of the slit may vary a in the extending direction and can form a curtain wall with uniform thickness due to the spontaneous falling of the glaze.

According to the method of applying the curtain glazing in accordance with the present invention, the glazing efficiency can be improved remarkably by practicing any of the first and third methods. The application of the glaze to the green tile material can be made quite homogenous to the each of individual green tile materials or to the entire green tile materials. Further, in the first through third method of the present invention, since the size of the glaze can used therein may be such a small size as corresponding to the length for one side of the green tile material, loss of the glaze can be saved in a case of changing the kind of the glaze, or cleaning operation upon change of the kind of the glaze can be facilitated. Further, according to the third method of the present invention, since unnecessary glaze is not deposited to the circumferential sides or the rearface of the green tile material after glazing, there is no requirement for the subsequent finishing work (removal of unnecessary glaze), so that the yield and the efficiency for the glazing step can be improved outstandingly. Furthermore, since unnecessary glaze is not deposited to the rearface of the green tile material, when the green tile material is subsequently baked in a roller hearth kiln, there is no worry that unnecessary glaze is deposited to rollers in the kiln. Accordingly, frequency of interrupting the operation of the kiln regarding the amendment for the diameter of the roller, etc can be reduced and, in addition, the working life of the roller can be increased. The method of the present invention can thus provide various advantages.

BRIEF DESCRIPTION OF THE DRAWINGS

Fig. 1 is a perspective view illustrating the state of applying curtain glazing to green tile materials by the first or the second method according to the present invention; and
Fig. 2 is a partially cut-way perspective view illustrating a green material pallet used for the third method according to the present invention.

DESCRIPTION OF THE PREFERRED EMBODIMENTS

The present invention will now be described with reference to the accompanying drawings illustrating preferred embodiments thereof.

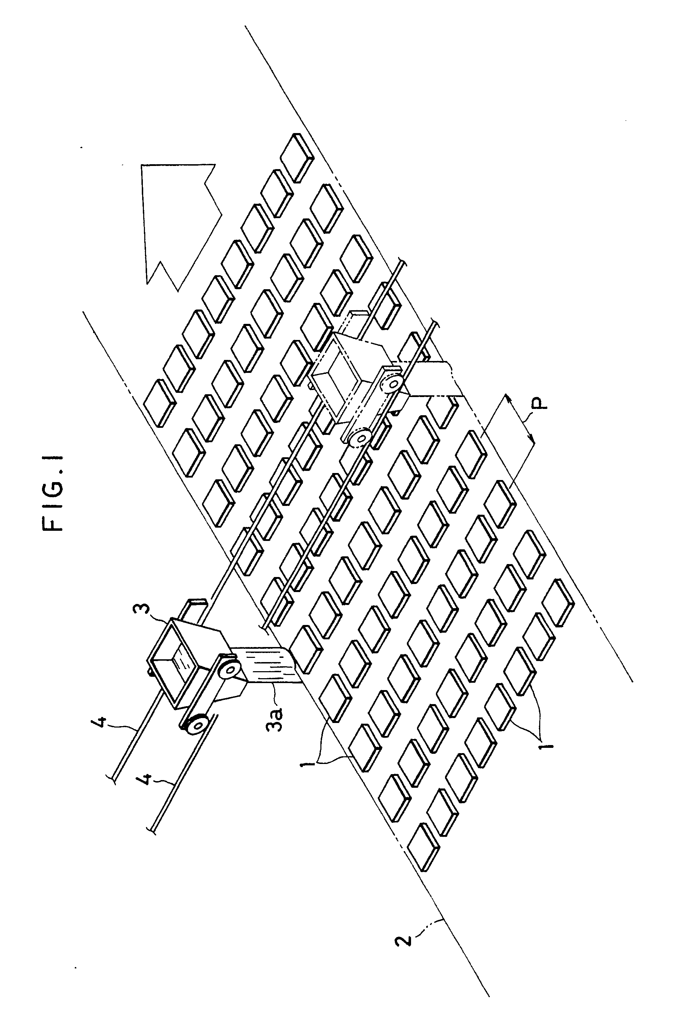

Fig. 1 is a perspective view illustrating the state of practicing the first method and the second method according to the present invention in which green tile materials 1, a material conveying path and a glaze can 3 are disposed each at a predetermined arrangement. As apparent from Fig. 1, the material conveying path 2 is conveyed along the direction indicated by a blank arrow and has such a path width that a plurality of green tile materials 1 (8 sheets in the drawing) can be arranged in a lateral row. On the other hand, the glaze can 3 is situated above the side of the material conveying path 2. The glaze can 3 has a size slightly greater than the length for one side of the green tile material 1 in the direction parallel with the conveying direction of the material conveying path 2 (refer to the blank arrow), and a curtain film 3a due to the spontaneous falling of the glaze is formed along this direction. Further, the glaze can 3 is so adapted that it can reciprocate along guide rails 4, 4 laid in the direction perpendicular to the conveying direction of the material conveying path 2 (refer to blank arrow) above that path.

With the green tile materials 1, the material conveying path 2 and the glaze can 3 being situated in such a positional relationship, the glaze can 3 is moved along the guide rails 4, 4 while forming the falling stream of the curtain film 3a of the glaze from the glaze can 3, so that the glaze can be coated all at once to a plurality of green tile materials 1, 1, --- arranged in a lateral row in the first method according to the present invention. By the way, in the first method, since the green tile material 1 and the glaze can 3 are in a relative moving relationship to each other, this is substantially the same as in the conventional method of applying curtain glazing, in which green tile materials are passed in a longitudinal row below a fixed glaze can. In the first method of the present invention, however, since the green tile materials 1, 1, --- are fixed stationary upon coating, each of the green tile materials 1, 1, --- can be brought closer to each other when they are arranged laterally and glazing efficiency outstandingly excellent over that in the conventional curtain glazing method can be obtained. In the first method according to the present invention, it is desirable that the conveying surface of the material conveying path 2 is formed with a network- or comb-like member, porous material or a group of rollers so that no excessive glaze stays on the conveying surface.

In the second method according to the present invention, the material conveying path 2 is fed intermittently each by a longitudinal pitch P of the lateral row of the green tile materials after glazing has been applied for one lateral row of the green tile materials 1, 1, --- by the first method, and then moving the glaze can 3 in the returning direction along the guide rails 4, 4. That is, by alternately conducting the reciprocal movement of the glaze can 3 along the guide rails 4, 4 and the intermittent feeding of the material conveying path 2, continuous curtain glazing is enabled.

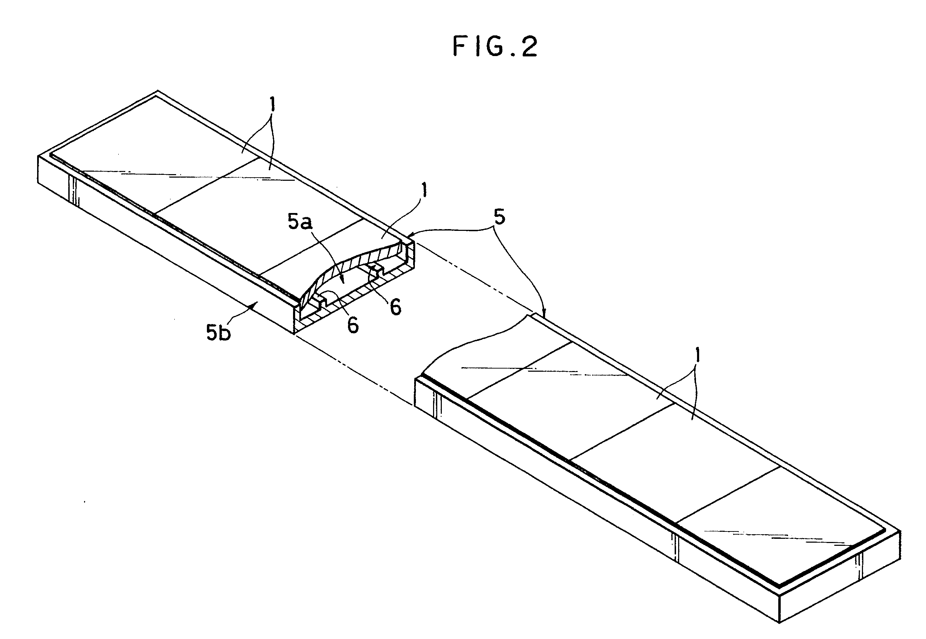

In the third method according to the present invention, green tile materials 1, 1, --- are accommodated in a green material pallet 5 as shown in Fig. 2 before practicing the first and the second method. The green material pallet 5 comprises a band-like receiving tray 5a having a glaze- retaining rib 5b standing upright from the four circumferential edges thereof. The receiving tray 5a has such a size that the shorter side thereof corresponds to the length for one side of the green tile material 1, while the longer side thereof corresponds to a multiple integer of the length for the other side of the green tile material 1. Accordingly, when a predetermined number of green tile materials 1 (for example, by the number of 14) are accommodated within the green material pallet 5, respective green tile materials 1, 1, --- are abutted against each other on their side faces, while the lateral side faces of the materials are abutted against the glaze retaining rib 5b of the green material pallet 5. The green material pallet 5 is conveyed with the longer sides thereof being on the forward and backward ends with respect to the conveying direction of the material conveying path 2. When glazing is applied to the green tile materials 1, 1, --- enhoused in this way in the green material pallet 5, since unnecessary glaze is not deposited to the circumferential sides and the rearface of the green tile material 1, there is no requirement for the operation of removing the unnecessary glaze after the glazing. In this embodiment, two ridges 6, 6 are formed on the receiving tray 5a, so that the green tile materials, 1, 1, --- is spaced upward from the upper surface of the material pallet 5 by about 0.5 mm. Accordingly, the green tile material 1, etc. can easily be released from the green material pallet 5 after glazing or baking.

There is no particular restriction for the structure of reciprocating the glaze can 3 or for the structure of the material conveying path 2 and any of known structures may be applied. Further, the green material pallet 5 (refer to Fig. 2) can be formed with metal, resin or wooden material, and depending on the case, it may be formed by using case-forming material capable of withstanding the heat of baking. Thus, details for the constitution of the first through third methods according to the present invention can properly be modified or improved in accordance with the made of practicing the invention.

## Claims

1. A method of applying curtain glazing which comprises arranging green tile materials before baking in a row and moving a glaze can for applying curtain glazing above and along the row of the green tile materials.

2. A method of applying curtain glazing, which comprises arranging a plurality of green tile materials along the direction in perpendicular to the conveying direction of a conveying path for the green tile materials, intermittently feeding said conveying path on every longitudinal pitch of lateral rows of the green tile materials, reciprocating a glaze can for applying curtain glazing above and along the direction of the lateral row of the green tile materials when the latter stands still and, after intermittently feeding said conveying path, reciprocating said glaze can relative to the next lateral row of the green tile materials.

3. A method of applying curtain glazing which comprises accommodating a predetermined number of green tile materials in a material pallet having a receiving tray with its shorter side corresponding to the length for one side of the green tile material and with its longer side corresponding to a multiple integer of the length for the other side of the green tile material and having a glaze-retaining rib formed along the circumference thereof, feeding said material pallet on the conveying path with its longer sides being situated at the front and rear ends and transporting the pallet below the moving area of the glazing can for applying curtain glazing that intersects the conveying direction.

4. A method as defined in any one of claims 1 to 3, wherein the glaze can has a slit-wise discharging port formed at the bottom thereof and glaze is discharged in a curtain-like stream through the discharging port.

# FIG.1

EP 0 421 467 A2

# FIG.2

EP 0 421 467 A2